# EUROPEAN PATENT SPECIFICATION

(11) **EP 1 831 588 B1**
(45) Date of publication and mention of the grant of the patent: **12.12.2012**
(21) Application number: 04808824.9
(22) Date of filing: 24.12.2004
(51) Int. Cl.: F16G 5/16

(54) **METHOD FOR MANUFACTURING PUSH BELTS OF DISTINGUISHABLE TYPE AND A COMPOSITION OF PUSH BELT TYPES**
VERFAHREN ZUR HERSTELLUNG VON SCHUBRIEMEN VERSCHIEDENER ART UND ZUSAMMENSETZUNG FÜR SCHUBRIEMENARTEN
PROCEDE POUR FABRIQUER DES COURROIES DE POUSSEE D'UN TYPE DISTINCTIF, ET COMPOSITION DE CES COURROIES

(43) Date of publication of application: 12.09.2007
(73) Proprietor: Robert Bosch GmbH, 70442 Stuttgart (DE)
(72) Inventor: BRANDSMA, Arjen, NL-5045 WN Tilburg (NL); HOOGLAND, Robert, Willem, NL-5685 EG Best (NL); SMEETS, Paulus, Maria, NL-5046 JC Tilburg (NL)
(74) Representative: Plevier, Gabriel Anton Johan Maria
(86) International application number: PCT/NL2004/000908
(87) International publication number: WO 2006/068462

(56) References cited:
- EP-A- 0 510 990
- EP-A- 0 989 325
- EP-A- 1 132 649
- EP-A- 1 167 812
- EP-A- 1 179 689
- DE-A1- 2 414 989
- US-A- 4 427 401
- PATENT ABSTRACTS OF JAPAN vol. 010, no. 238 (M-508), 16 August 1986 (1986-08-16) & JP 61 070245 A (NISSAN MOTOR CO LTD), 11 April 1986 (1986-04-11)
- PATENT ABSTRACTS OF JAPAN vol. 2003, no. 12, 5 December 2003 (2003-12-05) -& JP 2003 232408 A (KOYO SEIKO CO LTD), 22 August 2003 (2003-08-22)
- PATENT ABSTRACTS OF JAPAN vol. 008, no. 160 (M-312), 25 July 1984 (1984-07-25) & JP 59 054838 A (HONDA GIKEN KOGYO KK), 29 March 1984 (1984-03-29)

## Description

The present invention is related to a manufacturing method for push belts of distinguishable type as defined in the preamble of claim 1. The invention further relates to a composition of push belt types as such. Push belts per se are generally known, for example from EP-A-0.522.612, and are in particular used in a continuously variable transmission or CVT for motor vehicles.

The known push belt is suited and intended to be used as a driving belt in a CVT of the type provided with a primary variable pulley provided on a primary shaft and a secondary variable pulley provided on a secondary shaft. The push belt, which is composed of an endless tensile means and a plurality of transverse elements that are slideably arranged on the tensile means, i.e. longitudinally movable along its circumference, is wound around said pulleys for transmitting an engine power there between. Each of the variable pulleys comprises two conical discs at least one of which is axially movable with respect to the other for, on the one hand, varying a running radius of the push belt between the discs of the respective pulley and for, on the other hand, applying a clamping force to the belt.

In the known push belt the endless tensile means is placed in a laterally extending recess of the transverse elements. This recess is defined between a top and a bottom part of a respective element, which parts confine the said means in radial direction, and a pillar part of that element, which latter part connects the bottom and the top part and which confines the said means in axial direction. The bottom part is essentially of trapezoidal shape, the widest side of the trapezoid also determining the width of the elements. The lateral, i.e. axial sides of the latter part are slanted and are mutually oriented at an angle, the so-called belt angle. These sides are designed to arrive into frictional contact with the conical pulley discs. The transverse elements each have a front principal face and a back principal face separated by a side face over the thickness of the elements.

Usually a specific type of push belt is designed and specified to be able to reliably function in the transmission during a certain service life, which transmission is applied in combination with an engine having a certain maximum power output. Alternatively and more accurately such power capacity of the push belt may also be specified in terms of the engine map, i.e. the maximum torque produced by the engine versus its rotational speed. However, for the sake of clarity, the specification of a specific push belt type is hereunder defined only in terms of the maximum engine torque, e.g. 150 Nm (Newton-metre), it has been designed for. If such a belt specification in terms of its nominal torque capacity is exceeded during operation in the transmission, the service life of the push belt may decrease significantly or it may fail immediately.

An important design factor for determining such torque capacity of the push belt is the tensile stress level that prevail in the endless tensile means during operation, which represent a fatigue loading of the said means. The level of the clamping force applied at each pulley to the said slanted sides of the transverse elements that are a held between the discs thereof and the respective running radius of the belt determines the amount of torque that can be transmitted by means of friction between that respective pulley and the belt. Further, by applying a clamping force at each pulley, the transverse elements are urged radially outward at both pulleys, whereby the endless tensile means is subject to a considerable tensile stress. Also bending stresses occur in the endless tensile means, since it follows a partly curved and partly straight trajectory in the transmission. In this respect the known endless tensile means is laminated, i.e. is composed of a number of radially nested flat metal rings or bands that are relatively thin to limit the level of such bending stresses.

The above-mentioned tensile and bending stresses change cyclically as the belt rotates around the pulleys during operation. Hence, generally metal fatigue of the endless tensile means ultimately limits the operational life-span of the push belt. Of course, it is well known that the stress level in the endless tensile means and thus the nominal torque capacity of the belt is a/o related to the cross sectional surface area of the endless tensile means thereof. Thus the primary measure for designing, i.e. setting the service life of a particular push belt, i.e. for effectively adapting the belt's design to the respective torque requirements that exist in the broad field of automotive application of the CVT, is to increase the said cross sectional surface area by increasing the axial width and/or the radial height or thickness of the endless tensile means. This design feature is explained in more detail in the European patent application EP-A-1.089.013 in the name of Applicant.

In relation to the axial width of the of the endless tensile means it is remarked that it is common practice to compose it of two sets of radially nested rings that are mutually axially spaced by the pillar part of the transverse elements. However, ultimately such width is limited also by features of the transmission design, which can neither be modified easily nor cheaply. In relation to the thickness of the endless tensile means it is remarked that it is common practice to adapt the number of rings applied in each such set. Although this adaptation may be performed more easily and cheaply as compared to the modification of the entire transmission design, it still comes with the requirement that also the design of the transverse elements needs to adapted in order to accommodate the new thickness of the endless tensile means, i.e. the modified number of rings. In particular the radial height of the recess that is defined and measured between the top part and the bottom part of the transverse element needs to be adapted, because normally only a relatively narrowly defined radial gap is allowed between the endless tensile means and the top part of the transverse element. Hereby it is realised that a rotation of the transverse elements around an axis in the longitudinal direction relative to the endless tensile means is limited. This design requirement and its positive effect on push belt durability are explained in more detail in the European patent EP-0.626.526-B1 in the name of Applicant.

Further, in manufacturing, several belt classes of distinguishable torque capacity, i.e. push belt types, also comes with the disadvantage that the tooling needs to be adapted to each specific belt design and thus also needs to be changed between production runs of different belt types. Moreover, manufacturing machines and tools are likely to be used insufficiently efficient, while also the risk of errors such as cross-contamination of parts between different product types, as well as the cost of preventing the same, increases with the number of belt classes produced.

Accordingly, it becomes economically profitable or feasible to develop and manufacture a new push belt type having a new, distinguishable torque capacity only if the particular CVT application of such new type would be (known in advance to be) produced in sufficiently large numbers.

Presently, Applicant has commercialised 4 push belt types having a different torque capacity, for covering a vast part of the need for torque levels as practised in automotive design. Belts are produced having a nominal width of either 24 mm or 30 mm, whereby for each such belt width, the endless tensile means is composed of two sets of either 9 or 12 radially nested rings. A draw-back of the current practical and economical manner of covering the market is thus that a push belt may be oversized, i.e. have too high a torque capacity, in view of a specific CVT application of the belt. E.g. in the above, actual practice based example, only four push belt types of distinguishable torque capacity are available for covering a vast range of engine torque levels from 75 Nm or less up to more than 400 Nm.

The present invention therefore aims to reduce the additional costs of developing and/or manufacturing belt classes of distinguishable specification, so that more types of push belt having a distinguishable torque capacity may become available in an economically viable manner to more accurately meet the demand of specific CVT applications of the push belt, while at the same time maintaining its durability and generally accepted service life. Hereby, the cost of the CVT may be reduced, at least on average over a number of applications having different torque requirements.

According to the invention, such aim may be realised by a manufacturing method that incorporates the measure described in the characterising portion of claim 1. With this measure a composition of at least two push belt types may be produced whereof each type has a different torque capacity, which is determined by the thickness of the endless tensile means, e.g. by way of the number of radially stacked rings comprised therein, while the height of the recess between the top part and the bottom part of the transverse elements for receiving the respective endless tensile means is identical for both types of push belt in the composition. Further, in accordance with the invention at least one push belt type of the composition is provided with special rotation limiting means to satisfy the above-mentioned design requirement of limiting a freedom of rotation of the transverse elements around an axis in the longitudinal direction relative to the endless tensile means. Thus, in case the radial gap between the upper element part and the endless tensile means is relatively large, i.e. when the latter is relatively thin, the freedom of said rotation of the transverse elements relative to the endless tensile means, which may otherwise become too large, is favourably limited by the provision of additional rotation limiting means.

The composition according to the invention comes with the advantage that the various push belt types comprised therein may be manufactured favourably economically. This is because the design of the transverse elements, i.e. their outer contour as seen in a front elevation and more in particular the radial height of the recesses of the elements for receiving the endless tensile means, does no longer have to be adapted to the thickness of the endless tensile means. Thus, in principle, a single element design suffices for the said composition. Also the feature of the conventional belt potentially being oversized for a particular CVT application is overcome by the present invention, since the thickness of the endless tensile means can be adapted to each individual CVT application. Of course, hereby also a considerable materials cost saving is realised, because on average the endless tensile means of the composition of push belt types comprises fewer rings.

According to the invention the rotation limiting means may be embodied in various manners, which in some cases are known per se. However, even those means that are known per se, surprisingly have never been applied for realising the goal of favourably manufacturing a composition of push belt types each having a distinguishable torque capacity.

Inter alia, it is remarked that from the European patent application EP-A-0.989.325 it is known per se to apply a radially innermost ring in the set of rings making up the endless tensile means that is thinner than the other rings of the set; for the purpose of increasing the durability and life span of the endless tensile means and of the drive belt as a whole.

The invention will now be illustrated further with reference to the accompanying figures.
Figure 1 shows a schematic representation of a continuously variable transmission with a drive belt and pulleys.
Figure 2 shows a simplified cross sectional view of the continuously variable transmission of figure 1.
Figures 3 to 8 each represent two distinguishable halves of a longitudinally oriented cross section of two distinguishable types of push belt of a composition produced in accordance with the invention.

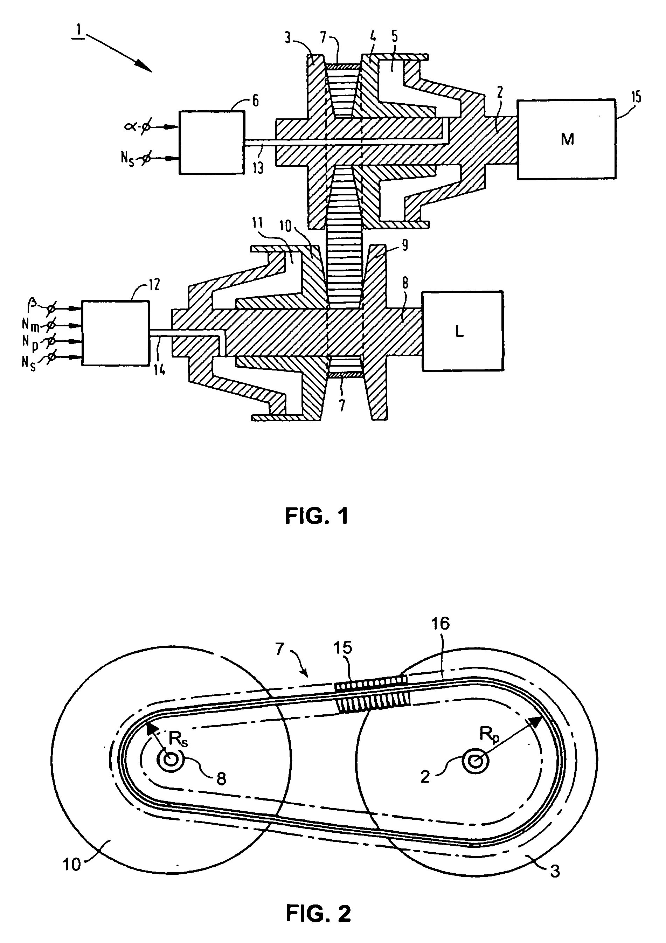

In figure 1 a schematic cross section is given of a continuously variable transmission 1 located between an engine M and a load L for varying a speed ratio and a torque ratio there between. The transmission 1 comprises a primary shaft 2 that normally is driven by the engine M and a secondary shaft 8 that normally drives the load L. A primary pulley 3, 4 is provided on the primary shaft 2 and comprises an axially fixed disc 3 and an axially movable disc 4. A secondary pulley 9, 10 is provided on the secondary shaft 8 and likewise comprises an axially fixed disc 9 and an axially movable disc 10. The movable disc 4 of the primary pulley 3, 4 is operated by respective movement means 5, 6 and 13, which control a pressure in a primary cylinder chamber 5 in dependence on a number of parameters, such as for example an accelerator paddle depression α and a rotational speed Ns of the secondary shaft 8. Likewise, the movable disc 10 of the secondary pulley 9, 10 is operated by respective movement means 11, 12 and 14, which control a pressure in a secondary cylinder chamber 11 in dependence on a number of parameters, such as for example an engine throttle opening β, a rotational speed Nm of the engine M, a rotational speed Np of the primary shaft 2 and the rotational speed Ns of the secondary shaft 8. A so-called push belt type driving belt 7 is provided around the said pulleys while being frictionally clamped between the respective discs 3, 4; 9, 10 thereof for transmitting a mechanical (engine) power between the said shafts 2 and 3. Hereby, the level of the said primary and secondary pressures determines the force by which the belt 7 is clamped and thus also maximum amount of torque that can be transmitted between the said shafts 2 and 3 by the drive belt 7.

In figure 2 a simplified side elevation of the continuously variable transmission 1 is shown. The push belt 7 is composed of an endless tensile means 16 and a plurality of transverse elements 15 that are slideably, i.e. longitudinally movably, arranged on and carried by the tensile means 16. The arrow marked Rs denotes the running radius of the push belt 7 between the secondary pulley discs 9 and 10 and the arrow marked Rp denotes its running radius between the primary pulley discs 3 and 4. The ratio between these running radii Rs and Rp determines the speed ratio of the continuously variable transmission 1.

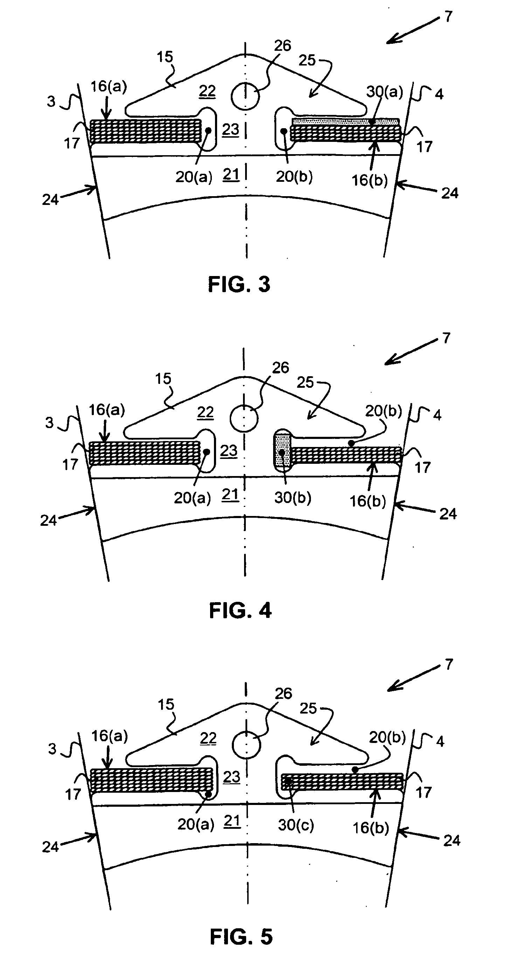

An example of the push belt 7 is depicted in more detail in the cross section of figure 3, while looking in the circumference direction of the belt 7. It is shown that the transverse elements 15 are provided with two recesses 20 each opening towards a mutually opposite axial direction. In the radial direction these recesses 20 are defined between a top part 21 and a bottom part 22 of the element 15. A pillar part 23 of the element 15 is located axially in-between the recesses 20, which pillar part 23 connects the bottom part 22 to the top part 21. The endless tensile means 16 of the belt 7, which in this example is composed of two sets 16(a), 16(b) of radially stacked, i.e. nested flat metal rings 17, is received by the elements 15 whereby each set 16(a), 16(b) is inserted in a respective recess 20(a), 20(b) thereof.

The lateral, i.e. axial sides 24 of the bottom part 22 are slanted, i.e. are mutually oriented at an angle, which angle essentially conforms to an angle defined between the essentially conically shaped pulley discs 3, 4 of a pulley 3, 4; 9, 10 such that these sides 24 may arrive into frictional contact with the respective discs 3, 4. The transverse element 15 has a front principal face 25 and a back principal face (not visible) separated over the thickness of the element 15 by a side face, which includes the above-mentioned axial sides 24 of the bottom part 22. The top part 21 of the transverse element 15 is provided with a protrusion 26 protruding from the front principal face 25 in the longitudinal or circumference direction of the belt 7, which protrusion 26 interacts with, i.e. engages a corresponding hole (not visible) provided in the back principal face of the transverse element 15, in casu an adjacent element 15 in the belt 7. Hereby, a mutual sliding movement of adjacent transverse elements 15 in a plane perpendicular to the longitudinal direction of the belt 7 is restricted. Although the transverse elements 15 may rotate relative to one another about a longitudinal axis centred through the protrusion 26, such rotation must be limited in the design of the drive belt 7 for the sake of operational durability. As is illustrated in the left-hand side of figure 3 is latter design requirement is normally realised in that only a relatively narrowly defined radial gap is present between the endless tensile means 16 and the top part 21 of the transverse element 15. Accordingly, the freedom of said rotation of the elements 15 is limited to the extend where it engages the endless tensile means 15 both by its head part 21 and by its bottom part 22 as is illustrated. Hereby it is realised that a rotation of the transverse elements around an axis in the longitudinal direction relative to the endless tensile means is limited.

During operation of the transmission 1 a clamping force is exerted on the push belt 7 by the pulleys 3, 4; 9, 10 and the transverse elements 15 are urged in a radially outward direction until they engage the endless tensile means 16 with their respective bottom parts 22, which endless tensile means 16 is tensioned thereby. When the primary pulley 3, 4 is drivingly rotated the transverse elements 15 that are in frictional contact therewith are also rotated, pushing forward 2 the other elements 15 of the push belt 7 and rotationally driving the secondary pulley 9, 10. Hereby the transverse elements 15 are guided by the endless tensile means 16.

The (tension and bending) stress level in the endless tensile means 16 ultimately determines the specified power or torque capacity of the push belt 7, which may thus be modified, i.e. adapted to a specific CVT application thereof, by modifying the axial width and or the radial height or thickness of the said means 16. However, both such modifications generally also necessitate a modification of the design of the transverse elements 15, respectively by increasing the width of their bottom part 22 for width-wise engagement of the endless tensile means 16 or by increasing the radial height of their recesses 20(a), 20(b) for narrowly accommodating the endless tensile means 16, i.e. with only a relatively small radial gap defined between the said means 16 and the top part 21 of the elements 15.

The present invention aims to overcome the above mentioned disadvantage of the known design of the push belt 7 and to reduce the costs of developing and/or manufacturing belt classes of distinguishable specification. According to the invention, such aim is realised by providing the push belt 7 with transverse elements 15 whereof the recess 20 is designed with a relatively large radial dimension or height such that it is able to accommodate a large range of endless tensile means 16 characterised by their distinguishable thickness or, alternatively, the number of nested rings 17 comprised therein. The invention departs from the awareness that the individual rings 17 of the endless tensile means 16 may be produced in larger or smaller numbers and at an appropriate circumference length relatively easily and at relatively small additional costs.

Thus, one single design version of the transverse element 15 may be applied in a large range or composition of push belt types of mutually different torque capacity. According to the invention the above-mentioned design requirement of a limited rotation freedom for the transverse elements 15 may thereby be realised by providing additional rotation limiting means 30, which are at least present in those types of push belt 7 having a less than maximum torque capacity. That is to say, those types of push belt 7 of the composition wherein the radial gap between the endless tensile means 16 when being in contact with the bottom part 22 of the transverse elements 15 and the top part 21 thereof exceeds a certain threshold. Preferably, such threshold is determined in accordance with EP-A-0.626.526, i.e. such that the maximum rotation freedom amounts to 1 degree or less, more preferably to between 0,2 and 0,8 degrees, still more preferably to 0,5 degrees.

A composition of types of push belt 7 in accordance with the present invention thus comprises at least two types of distinguishable torque capacity determined by the mutually different thickness of the endless tensile 16 means applied therein. Whereof at least the belt type of lesser torque capacity, i.e. having the thinner endless tensile means 16, or, put alternatively, incorporating a smaller number of rings 17, is provided with the said rotation limiting means 30.

The figures 3 till 8 each time illustrated such composition of two types of push belt 7, whereby the left-hand side of the respective figure 3-8 in each instance depicts the left side of a first type of the composition having a maximum torque capacity, i.e. being provided with the maximum number (i.e. six (6) in the illustrated example; practically, however, 12 to 14) of rings 17 in each ring set 16(a), 16(b) of the endless tensile means 16 in relation the height of the recess 20 of the transverse elements 15. In the right-hand side of each figure the right side of a second type of the respective composition is depicted having the smaller torque capacity, i.e. being provided with the less rings 17 in each ring set 16(a), 16(b) of the endless tensile means 16 (i.e. four (4) rings 17 in the illustrated example; practically, however, 6 to 13). Thus by taking the dashed centreline in each of the figures 3-8 as a mirror line of the left-hand side of the respective figure, the first belt type of the composition may be envisaged as whole and, vice versa, by taking the dashed centreline in each of the figures 3-8 as a mirror line of the right-hand side of the respective figure, the second belt type of the composition may be envisaged as whole.

A first possible embodiment 30(a) of the rotation limiting means 30 in accordance with the invention is presented in the right-hand side of figure 3. This second belt type of the composition of figure 3 being produced with a reduced number of stacked rings 17 in the endless tensile means 16(b) as compared with the first belt type of this particular composition shown on the left-hand side of figure 3. Where in the said first belt type the said rotation freedom of the transverse elements 15 is limited by the relatively narrowly defined radial gap between the respective endless tensile means 16(a) and the top part 21 of the elements 15, in the said second belt type this is additionally realised by the rotation limiting means 30 in the form of a filler ring 30(a) or, possibly, a small number of radially stacked filler rings, provided inside the recesses 20(b) of the transverse elements 15 radially disposed of the respective endless tensile means 16.

According to the invention such filler ring 30(a) may be of a relatively cheap, wear resistant and easily treatable material, such as, preferably, a suitable rubber. Possibly also a suitable (low-grade) metal or plastic can be applied. Of course the filler ring 30(a) must be able to follow the -varying- trajectory of the push belt (7), so the material must also be bendable at least along its circumference, i.e. in the longitudinal direction. The filler ring 30(a) is not intended to have a load-carrying function, i.e. is not notionally tensioned during operation, but is solely provided for filling up the radial gap between the endless tensile means 16(b) and the top part 21 of the transverse elements 15, preferably to such an extend that a difference remaining between the radial height of the recess 20 and the sum of a thickness of the filler ring 30(a) and of the endless tensile means 16(b) essentially conforms to the said defined radial gap in the said first belt type of the composition. Although in figure 3 the filler ring 30(a) is shown to be provided radially outside the endless tensile means 16(b), it could, in principle, also be provided radially inside thereof between the endless tensile means 16(b) and the bottom part 22 of the transverse elements 15, in which case it should be of a material having a sufficiently small Young's modulus of elasticity to prevent it from being significantly tensioned.

In a second embodiment 30(b) of the rotation limiting means 30 in accordance with the invention, which is illustrated in figure 4, the said second belt type of the composition on the right-hand side of this figure is provided with a locking ring 30(b) placed inside the recess 20(b) of the transverse elements 15 between the pillar part 23 thereof and the endless tensile means 16(b). In this design the said rotation freedom of the transverse elements 15 is limited by the relatively narrow axial gap remaining between the endless tensile means 16(b) when being in contact with the respective pulley disc 4, the locking ring 30(b) and the pillar part 21 of the elements 15.

A third embodiment 30(c) of the rotation limiting means 30 in accordance with the invention is illustrated in figure 5. In this case the said means 30(c) are incorporated in the design of the endless tensile means 16, which is preferably applied in both belt types of the composition. In this design the axial width of at least one ring 17 in both sets 16(a), 16(b) of rings 17 of the endless tensile means 16 is designed to be so large that the said rotation freedom of the transverse element 15 is limited to a desired extend by the relatively narrowly defined axial gap between the pillar part 21 of transverse element 15 and the said at least one ring 17 when being in contact with the respective pulley disc 4.

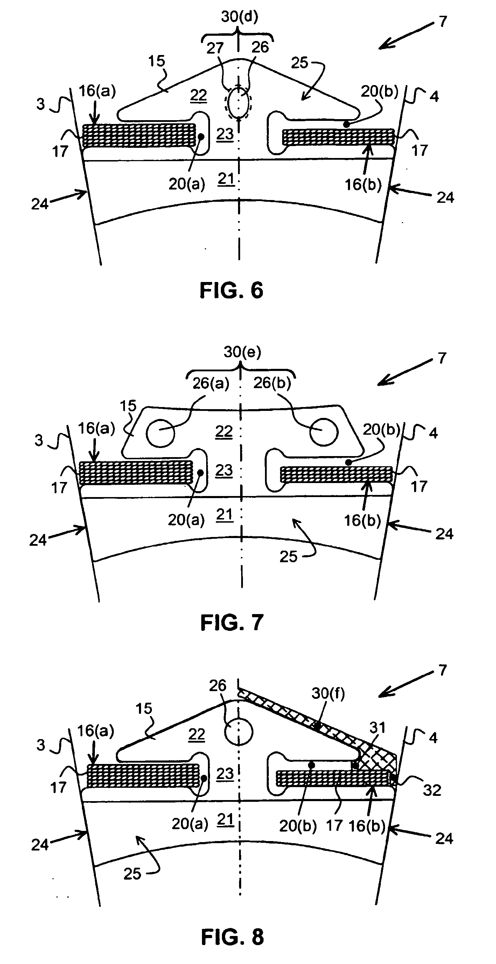

A fourth embodiment 30(d) of the rotation limiting means 30 in accordance with the invention is illustrated in figure 6. In this case the said means 30(d) are incorporated in the design of the protrusion 26 and the hole 27 of the elements 15, which is preferably applied in both belt types of the composition. In this design the protrusion 26 and the pertaining hole 27 have a non-circular contour such that the said rotation freedom of the transverse elements 15 is limited to a desired extend by the protrusion 26 of one transverse element 15 engaging a side wall of the hole 27 of the next, i.e. adjacent element 15 that is already clamped and aligned between the pulley discs 3, 4. The protrusion 26 and hole 27 may have an oval contour, as is illustrated in figure 6, but they may also be provided with an elongated contour, possibly extending along the entire radial height or axial width of the elements 15.

A fifth embodiment 30(e) of the rotation limiting means 30 in accordance with the invention is illustrated in figure 7. In this case the said means 30(e) are incorporated in the design of the protrusion 26 and the hole (not visible) of the elements 15, which is preferably applied in both belt types of the composition. In this design a set of protrusions 26(a), 26(b) and pertaining holes (not visible) are provided such that the said rotation freedom of the transverse elements 15 is limited to a desired extend by the protrusions 26(a), 26(b) of one transverse element 15 engaging the sides of the holes of the next, i.e. adjacent element 15 that is already clamped and aligned between the pulley discs 3, 4. In this particular embodiment, the protrusions 26(a), 26(b) and holes may still be provided with a circular contour.

Further, a sixth possible embodiment 30(f) of the rotation limiting means 30 in accordance with the invention is illustrated in figure 8. In this case, the said second belt type of the composition on the right-hand side of this figure is provided with one or more clips 30(f) along its circumference. In relation to limiting the said rotation freedom, such clip 30(f) functions in much the same manner as the filler ring 30(a) of figure 3. To this end, the clip 30(f) surrounds the top part 21 of the element 15 and, on either axial side thereof, is provided with an axially inward extending hook part 31 that hooks around the head part 21 into a respective recess 20(b) and at least partly fills up the said radial gap.

Additionally, the clip 30(f) may also be provided with a radially inward extending flange part 32 on either axial side thereof, which flange part 32 confines a respective ring set 16(b) favourably also in the axially direction. The clip 30(f) may encompass the entire circumference of the push belt or it may cover over only one or a couple of transverse elements 15 thereof, in which latter case a limited number of clips 30(f) suffices for attaining the desired effect. Preferably, the clip 30(f) is made from an at least slightly resiliently bendable material.

Finally, it is referred to a seventh (non-illustrated) possibility for incorporating rotation limiting means in accordance with the invention. In this embodiment the push belt is produced in a so-called pre-tensioned state, which involves the tensioning of its endless tensile means even in an unloaded state of the belt, by providing the belt with a continuous array of transverse elements having a combined longitudinal dimension that is greater than a circumference length of the endless tensile means in a non-tensioned state thereof. In such a design of the push belt a pushing force exists between the elements in all circumstances, which pushing force is exerted as a normal force on the front and back principal faces of the elements such that a mutual rotation of one element relative to an adjacent elements that is already clamped and aligned between the pulley discs may be prevented simply by friction.

The present invention, apart from the preceding description of the drawing and all details therein that are readily and unambiguously derivable therefrom by a person skilled in the art, is defined by the following set of claims.

## Claims

1. Method for manufacturing a number of push belts (7) of each of at least two distinguishable types to be used in a continuously variable transmission in a motor vehicle, each belt type having an endless tensile means (16) of a mutually different radial thickness, which endless tensile means (16) is received in a recess (20) of transverse elements (15) of a respective belt (7), which transverse elements (15) are provided slideably on the endless tensile means (16) in such a number that they form an essentially continuous array along the circumference of the endless tensile means (16), whereby a height of a respective recess (20) is defined in the radial direction relative to the endless tensile means (16) between a bottom part (21) and a top part (22) of the respective transverse element (15), **characterised in that** the said belt types are produced with transverse elements (15) having the same recess (20) height.

2. Method according to claim 1, **characterised in that** rotation limiting means (30) for limiting a rotation of the transverse elements (15) relative to the endless tensile means (16) about the longitudinal direction thereof are incorporated in at least a first of the said belt types, which first belt type has an endless tensile means (16) being of a lesser thickness than that of a second of the said two belt types.

3. Method according to claim 2, **characterised in that** the rotation limiting means (30) limit the said relative rotation to 1 degree or less, preferably to within a range of 0.2 to 0.8 degrees, more preferably to about 0.5 degrees.

4. Method according to any one of the claims 2 or 3, **characterised in that** the rotation limiting means (30) of the said first belt type comprise at least one of the following set of measures:
- the measure of an at least longitudinally bendable filler ring (30(a)) being provided inside the recesses (20(b)) of the transverse elements (15) radially inside or outside the respective endless tensile means (16(b));
- the measure of an at least longitudinally bendable locking ring (30(b)) being provided inside the recesses (20(b)) of the transverse elements (15) axially in-between the endless tensile means (16(b)) and respective pillar parts (23) of the elements (15), which connect the bottom part (21) of the respective elements (15) to their top part (22);
- the measure of the belt (7) being produced with a defined axial gap between the endless tensile means (16(b)) and a pillar part (21) of each of the elements (15) thereof, which pillar part (23) connects the bottom part (21) of the respective element (15) to its top part (22), whereby the said rotation of the transverse elements (15) is limited by the pillar part (23) contacting the endless tensile means (16(b));
- the measure of each transverse element (15) incorporating a protrusion (26) protruding from a front principle face (25) of the element (15) in the longitudinal direction of the belt (7) and a hole (27) provided in a back principle face of the element (15), the protrusion (26) of one element (15) engaging the hole (27) of a respectively adjacent element (15), which protrusions (26) and holes (27) are provided with a non-circular, preferably elliptical, contour (30(d)) as seen in the longitudinal direction;
- the measure of each transverse element (15) incorporating two protrusions (26(a), 26(b)) provided on a front principle face (25) of the elements (15) and two holes provided in a back principle face of the elements (15), which protrusions (26(a), 26(b)) each engage a pertaining hole of a respectively adjacent element (15);
- the measure of the belt (7) being provided with a clip (30(e)), which encompasses the top part (22) of at least one transverse element (15) and which is provided with an axially extending hook part (31) that extends inside the recess (20(b)) of the element (15) in-between the top part (22) and the endless tensile means (16(b));
- the measure of the belt (7) being produced in a pre-tensioned state of the endless tensile means (16(b)) by the combined longitudinal dimension of the continuous array of transverse elements (15) applied therein being greater than the circumference of the endless tensile means (16(b)) in an non-tensioned state.

5. Method according to any one of the preceding claims, **characterised in that** the height of the recesses (20) is dimensioned such that at least in the radial direction it is entirely occupied by the endless tensile means (16) of a first of the said belt types, which first belt type has an endless tensile means (16) being of a greater thickness than that of a second of the said belt types. >

6. Method according to any one of the preceding claims, **characterised in that** the said belt types are produced from transverse elements (15) having a mutually corresponding outer contour as seen in a longitudinally oriented cross-section of the belt (7).

7. Method according to any one of the preceding claims, **characterised in that** the transverse elements (15) of the said belt types are of an at least largely identical design.

8. Method according to any one of the preceding claims, **characterised in that** the endless tensile means (16) is composed of at least one set (16(a), 16(b)) of radially stacked flat metal rings (17), each one of the said belt types being distinguishable by the number of rings (17) applied in the at least one set (16(a), 16(b)).

9. Method according to claim 8, **characterised in that** the rings (17) of the said belt types are of an identical thickness.

10. Method according to any one of the preceding claims, **characterised in that** each one of the said belt types is of a different specification in terms of its nominal torque capacity, which specification is determined in relation to the thickness of the endless tensile means (16) respectively applied therein.

11. Composition of at least two types of push belts (7) manufactured in accordance with a method according to any one of the preceding claims.

12. Composition of two motor vehicles, each motor vehicle comprising a continuously variable transmission including a push belt (7) that is provided with an endless tensile means (16) having a radial thickness and with transverse elements (15) defining a recess (20) wherein the endless tensile means (16) is located and whereof a height is defined in the radial direction between a bottom part (21) and a top part (22) of the transverse element (15), the endless tensile means (16) of the push belts (7) of the said two motor vehicles having a mutually different radial thickness, **characterised in that** the transverse elements (15) of the push belts (7) of the said two motor vehicles are identical.

## Patentansprüche

1. Verfahren zum Herstellen einer Anzahl von Schubriemen (7) jedes von wenigstens zwei unterscheidbaren Typen zur Verwendung in einem stufenlosen Getriebe in einem Kraftfahrzeug, wobei jeder Riementyp ein endloses dehnbares Mittel (16) mit gegenseitig unterschiedlicher radialer Dicke aufweist, wobei das endlose dehnbare Mittel (16) in einer Aussparung (20) von Querelementen (15) eines entsprechenden Riemens (7) aufgenommen ist, wobei die Querelemente (15) verschiebbar auf den endlosen dehnbaren Mitteln (16) in einer Anzahl vorgesehen sind, derart, dass sie eine im Wesentlichen kontinuierliche Anordnung längs des Umfangs der endlosen dehnbaren Mittel (16) bilden, wobei eine Höhe einer entsprechenden Aussparung (20) in der radialen Richtung relativ zu den endlosen dehnbaren Mitteln (16) zwischen einem unteren Abschnitt (21) und einem oberen Abschnitt (22) des entsprechenden Querelements (15) definiert ist, **dadurch gekennzeichnet, dass** die Riementypen mit Querelementen (15) hergestellt werden, welche die gleiche Höhe der Aussparung (20) aufweisen.

2. Verfahren nach Anspruch 1, **dadurch gekennzeichnet, dass** Drehbegrenzungsmittel (30) zum Begrenzen einer Drehung der Querelemente (15) relativ zu den endlosen dehnbaren Mitteln (16) um deren Längsachse in wenigstens einen ersten der Riementypen integriert sind, wobei der erste Riementyp endlose dehnbare Mittel (16) aufweist, die von einer geringeren Dicke sind als die des zweiten der beiden Riementypen.

3. Verfahren nach Anspruch 2, dadurch gekenntzeichnet, dass die Drehbegrenzungsmittel (30) die relative Drehung auf 1 Grad oder weniger, vorzugsweise bis auf einen Bereich von 0,2 bis 0,8 Grad, stärker bevorzugt auf 0,5 Grad begrenzen.

4. Verfahren nach einem der Ansprüche 2 oder 3, **dadurch gekennzeichnet, dass** die Drehbegrenzungsmittel (30) des ersten Riementyps wenigstens eine der folgenden Gruppe von Maßnahmen umfassen:
- die Maßnahme, dass ein wenigstens in Längsrichtung biegsamer Füllring (30(a)) innerhalb der Aussparungen (20(b)) der Querelemente (15) radial innerhalb oder außerhalb der entsprechenden endlosen dehnbaren Mittel (16(b)) vorgesehen ist;
- die Maßnahme, dass ein wenigstens in Längsrichtung biegsamer Sperrring (30(b)) innerhalb der Aussparungen (20(b)) der Querelemente (15) axial zwischen den endlosen dehnbaren Mitteln (16(b)) und den entsprechenden Stützabschnitten (23) der Elemente (15), die den unteren Abschnitt (21) der entsprechenden Elemente (15) mit ihrem oberen Abschnitt (22) verbinden, vorgesehen ist.
- die Maßnahme, dass der Riemen (7) mit einer definierten axialen Lücke zwischen den endlosen dehnbaren Mitteln (16(b)) und einem Stützabschnitt (21) jedes seiner Elemente (15) hergestellt ist, wobei der Stützabschnitt (23) den unteren Abschnitt (21) des entsprechenden Elements (15) mit seinem oberen Abschnitt (22) verbindet, wobei die Drehung der Querelemente (15) durch den Stützabschnitt (23), der mit den endlosen dehnbaren Mitteln (16(b)) in Kontakt ist, begrenzt wird;
- die Maßnahme, dass jedes Querelement (15) einen Vorsprung (26), der von einer vorderen Basisfläche (25) des Elements (15) in Längsrichtung des Riemens (7) vorsteht, und ein Loch (27), das an einer hinteren Basisfläche des Elements (15) vorgesehen ist, integriert, wobei der Vorsprung (26) eines Elements (15) mit dem Loch (27) eines entsprechenden benachbarten Elements (15) in Eingriff ist, wobei die Vorsprünge (26) und Löcher (27) mit einer bei Betrachtung in Längsrichtung nicht runden, vorzugsweise elliptischen Kontur (30(d)) versehen sind.
- die Maßnahme, dass jedes Querelement (15) zwei Vorsprünge (26(a), 26(b)), die auf einer vorderen Basisfläche (25) der Elemente (15) vorgesehen sind, und zwei Löcher, die in einer hinteren Basisfläche der Elemente (15) vorgesehen sind, integriert, wobei jeder der Vorsprünge (26(a), 26(b)) mit einem zugehörigen Loch eines entsprechenden benachbarten Elements (15) in Eingriff ist;
- die Maßnahme, dass der Riemen (7) mit einer Klemmschelle (30(e)) versehen ist, die den oberen Abschnitt (22) wenigstens eines Querelements (15) einschließt und die mit einem sich axial erstreckenden Hakenabschnitt (31) versehen ist, der sich innerhalb der Aussparung (20(b)) des Elements (15) zwischen dem oberen Abschnitt (22) und den endlosen dehnbaren Mitteln (16(b)) erstreckt.
- die Maßnahme, dass der Riemen (7) in einem vorgespannten Zustand der endlosen dehnbaren Mittel (16(b)) hergestellt wird, wobei die kombinierte Abmessung in Längsrichtung der kontinuierlichen Anordnung von Querelementen (15), die darin verwendet werden, größer ist als der Umfang der endlosen dehnbaren Mittel (16(b)) in einem ungespannten Zustand.

5. Verfahren nach einem der vorhergehenden Ansprüche, **dadurch gekennzeichnet, dass** die Höhe der Aussparungen (20) so bemessen ist, dass sie wenigstens in radialer Richtung vollständig durch die endlosen dehnbaren Mittel (16) eines ersten der Riementypen eingenommen wird, wobei der erste Riementyp endlose dehnbare Mittel (16) aufweist, die eine größere Dicke aufweisen als die eines zweiten der Riementypen.

6. Verfahren nach einem der vorhergehenden Ansprüche, **dadurch gekennzeichnet, dass** die Riementypen aus Querelementen (15) hergestellt werden, die bei Betrachtung in einem längs orientierten Querschnitt des Riemen (7) eine sich gegenseitig entsprechende äußere Kontur aufweisen.

7. Verfahren nach einem der vorhergehenden Ansprüche, **dadurch gekennzeichnet, dass** die Querelemente (15) der Riementypen eine wenigstens weitgehend gleiche Konstruktion aufweisen.

8. Verfahren nach einem der vorhergehenden Ansprüche, **dadurch gekennzeichnet, dass** die endlosen dehnbaren Mittel (16) aus wenigstens einer Gruppe (16(a), 16(b)) aus radial gestapelten flachen Metallringen (17) bestehen, wobei jeder der Riementypen durch die Anzahl der Ringe (17), die in der wenigstens einen Gruppe (16(a), 16(b)) verwendet werden, unterscheidbar ist.

9. Verfahren nach Anspruch 8, **dadurch gekennzeichnet, dass** die Ringe (17) der Riementypen gleiche Dicke haben.

10. Verfahren nach einem der vorhergehenden Ansprüche, **dadurch gekennzeichnet, dass** jeder der Riementypen hinsichtlich seiner Nenndrehmomentkapazität eine unterschiedliche Spezifikation hat, wobei die Spezifikation mit Bezug auf die Dicke der endlosen dehnbaren Mittel (16), die darin jeweils angewendet werden, bestimmt ist.

11. Zusammensetzung von wenigstens zwei Typen von Schubriemen (7), die nach einem Verfahren nach einem der vorhergehenden Ansprüche hergestellt sind.

12. Zusammensetzung von zwei Kraftfahrzeugen, wobei jedes Kraftfahrzeug ein stufenloses Getriebe umfasst, das einen Schubriemen (7) umfasst, der versehen ist mit endlosen dehnbaren Mitteln (16), die eine radiale Dicke aufweisen, und mit Querelementen (15), die eine Aussparung (20) definieren, worin sich die endlosen dehnbaren Mittel (16) befinden und wovon eine Höhe in der radialen Richtung zwischen einem unteren Abschnitt (21) und einem oberen Abschnitt (22) des Querelements (15) definiert ist, wobei die endlosen dehnbaren Mittel (16) der Schubriemen (7) der zwei Kraftfahrzeuge eine gegenseitig unterschiedliche radiale Dicke aufweisen, **dadurch gekennzeichnet, dass** die Querelemente (15) der Schubriemen (7) der zwei Kraftfahrzeuge gleich sind.

## Revendications

1. Procédé de fabrication d'un certain nombre de courroies (7) de poussée de chaque type parmi au moins deux types distincts appelés à être utilisés dans une transmission à variation continue sur un véhicule à moteur, chaque type de courroie comportant un moyen (16) de traction sans fin d'une épaisseur radiale mutuellement différente, ledit moyen (16) de traction sans fin étant logé dans un évidement (20) d'éléments transversaux (15) d'une courroie (7) respective, lesdits éléments transversaux (15) étant installés de façon coulissante sur le moyen (16) de traction sans fin en un nombre tel qu'ils forment un groupe essentiellement continu le long de la circonférence du moyen (16) de traction sans fin, une hauteur d'un évidement (20) respectif étant définie dans la direction radiale par rapport au moyen (16) de traction sans fin entre une partie inférieure (21) et une partie supérieure (22) de l'élément transversal (15) considéré, **caractérisé en ce que** lesdits types de courroie sont constitués d'éléments transversaux (15) présentant la même hauteur d'évidement (20).

2. Procédé selon la revendication 1, **caractérisé en ce que** des moyens limiteurs (30) de rotation servant à limiter une rotation des éléments transversaux (15) par rapport au moyen (16) de traction sans fin autour de sa direction longitudinale sont incorporés à au moins un premier desdits types de courroie, ledit premier type de courroie comportant un moyen (16) de traction sans fin d'une épaisseur inférieure à celle d'un deuxième desdits deux types de courroie.

3. Procédé selon la revendication 2, **caractérisé en ce que** les moyens limiteurs (30) de rotation limitent ladite rotation relative à 1 degré ou moins, de préférence à un intervalle de 0,2 à 0,8 degré, de façon plus préférable à environ about 0,5 degré.

4. Procédé selon l'une quelconque des revendications 2 ou 3, **caractérisé en ce que** les moyens limiteurs (30) de rotation dudit premier type de courroie comportent au moins une mesure de l'ensemble de mesures suivant :
- la mesure consistant à placer un anneau (30(a)) de calage susceptible de fléchir au moins longitudinalement à l'intérieur des évidements (20(b)) des éléments transversaux (15), radialement en-deçà ou au-delà du moyen (16(b)) respectif de traction sans fin ;
- la mesure consistant à placer un anneau (30(b)) de blocage susceptible de fléchir au moins longitudinalement à l'intérieur des évidements (20(b)) des éléments transversaux (15) en position axialement intermédiaire entre le moyen (16(b)) de traction sans fin et des parties (23) de montant respectives des éléments (15), qui relient la partie inférieure (21) des éléments (15) respectifs à leur partie supérieure (22) ;
- la mesure consistant à produire la courroie (7) avec un espacement axial défini entre le moyen (16(b)) de traction sans fin et une partie (23) de montant de chacun de ses éléments (15), ladite partie (23) de montant reliant la partie inférieure (21) de l'élément (15) considéré à sa partie supérieure (22), ladite rotation des éléments transversaux (15) étant ainsi limitée par la partie (23) de montant en contact avec le moyen (16(b)) de traction sans fin ;
- la mesure consistant à incorporer à chaque élément transversal (15) une protubérance (26) dépassant d'une face principale avant (25) de l'élément (15) dans la direction longitudinale de la courroie (7) et un trou (27) pratiqué dans une face principale arrière de l'élément (15), la protubérance (26) de l'un des éléments (15) coopérant avec le trou (27) d'un élément (15) respectivement adjacent, lesdites protubérances (26) et lesdits trous (27) étant dotés d'un contour (30(d)) non circulaire, de préférence elliptique, vu dans la direction longitudinale ;
- la mesure consistant à incorporer à chaque élément transversal (15) deux protubérances (26(a), 26(b)) placées sur une face principale avant (25) des éléments (15) et deux trous pratiqués dans une face principale arrière des éléments (15), chacune desdites protubérances (26(a), 26(b)) coopérant avec un trou correspondant d'un élément (15) respectivement adjacent ;
- la mesure consistant à munir la courroie (7) d'une attache (30(e)), qui englobe la partie supérieure (22) d'au moins un élément transversal (15) et qui est dotée d'un patte (31) d'accrochage s'étendant axialement qui s'étend à l'intérieur de l'évidement (20(b)) de l'élément (15) en position intermédiaire entre la partie supérieure (22) et le moyen (16(b)) de traction sans fin ;
- la mesure consistant à produire la courroie (7) dans un état préchargé du moyen (16(b)) de traction sans fin en faisant en sorte que la dimension longitudinale combinée du groupe continu d'éléments transversaux (15) appliqués dans celui-ci soit supérieure à la circonférence du moyen (16(b)) de traction sans fin à l'état non tendu.

5. Procédé selon l'une quelconque des revendications précédentes, **caractérisé en ce que** la hauteur des évidements (20) est dimensionnée de telle façon qu'au moins dans la direction radiale, elle soit entièrement occupée par le moyen (16) de traction sans fin d'un premier desdits types de courroie, ledit premier type de courroie comportant un moyen (16) de traction sans fin d'une épaisseur supérieure à celle d'un deuxième desdits types de courroie.

6. Procédé selon l'une quelconque des revendications précédentes, **caractérisé en ce que** lesdits types de courroie sont produits à partir d'éléments transversaux (15) présentant un contour extérieur mutuellement correspondant, vu dans une coupe orientée longitudinalement de la courroie (7).

7. Procédé selon l'une quelconque des revendications précédentes, **caractérisé en ce que** les éléments transversaux (15) desdits types de courroie sont d'une conception identique au moins dans une large mesure.

8. Procédé selon l'une quelconque des revendications précédentes, **caractérisé en ce que** le moyen (16) de traction sans fin est composé d'au moins un ensemble (16(a), 16(b)) d'anneaux métalliques plats (17) empilés radialement, chacun desdits types de courroie étant reconnaissable au nombre d'anneaux (17) appliqués dans l'ensemble ou les ensembles (16(a), 16(b)).

9. Procédé selon la revendication 8, **caractérisé en ce que** les anneaux (17) desdits types de courroie sont d'épaisseur identique.

10. Procédé selon l'une quelconque des revendications précédentes, **caractérisé en ce que** chacun desdits types de courroie présente une spécification différente en termes de capacité de couple nominal, ladite spécification étant déterminée en relation avec l'épaisseur du moyen (16) de traction sans fin respectivement appliqués dans celui-ci.

11. Composition d'au moins deux types de courroies (7) de poussée fabriqués d'après un procédé selon l'une quelconque des revendications précédentes.

12. Composition de deux véhicules à moteur, chaque véhicule à moteur comportant une transmission à variation continue comprenant une courroie (7) de poussée dotée d'un moyen (16) de traction sans fin présentant une épaisseur radiale et d'éléments transversaux (15) définissant un évidement (20) où est situé le moyen (16) de traction sans fin et dont une hauteur est définie dans la direction radiale entre une partie inférieure (21) et une partie supérieure (22) de l'élément transversal (15), le moyen (16) de traction sans fin des courroies (7) de poussée desdits deux véhicules à moteur présentant une épaisseur radiale mutuellement différente, **caractérisée en ce que** les éléments transversaux (15) des courroies (7) de poussée desdits deux véhicules à moteur sont identiques.
